# EUROPÄISCHE PATENTSCHRIFT

(11) **EP 1 549 473 B1**
(45) Veröffentlichungstag und Bekanntmachung des Hinweises auf die Patenterteilung: **02.11.2006**
(21) Anmeldenummer: 03757677.4
(22) Anmeldetag: 17.09.2003
(51) Int. Cl.: B29C 33/00, H01F 41/12

(54) **GIESSFORM FÜR ZYLINDRISCHE GIESSHARZSPULEN**
CASTING MOULD FOR CYLINDRICAL CAST RESIN COILS
MOULE POUR BOBINES CYLINDRIQUES EN RESINE MOULEE

(30) Priorität: 30.09.2002 DE 10246542; 30.09.2002 DE 10246539; 22.11.2002 DE 10255564
(43) Veröffentlichungstag der Anmeldung: 06.07.2005
(73) Patentinhaber: SIEMENS AKTIENGESELLSCHAFT, 80333 München (DE)
(72) Erfinder: SORG, Fritz, 70180 Stuttgart (DE)
(86) Internationale Anmeldenummer: PCT/DE2003/003137
(87) Internationale Veröffentlichungsnummer: WO 2004/030886

(56) Entgegenhaltungen:
- WO-A-01/23167
- DE-A- 2 332 672
- DE-A- 4 426 138
- FR-A- 1 175 881

## Beschreibung

Die Erfindung betrifft eine Gießform für zylindrische Gießharzspulen, die sich entlang einer Achse erstreckt, mit einem äußeren, einen zylindrischen Gießbereich umgebenden Gießformmantel, der mit einer rohrförmig gebogenen Gießformmantelwand gebildet ist und mit einem Einfüllspalt, über den der Gießbereich mit Gießharz befüllbar ist und durch den der Gießformmantel in Umfangsrichtung unterbrochen ist.

Eine solche Gießform ist aus der deutschen Patentschrift DE 44 26 138 C2 bekannt. Der Gießformmantel der bekannten Gießform weist eine Gießformmantelwand auf, die im Bereich ihrer in axialer Richtung liegenden Kanten jeweils über ihre gesamte axiale Länge winklig nach außen abgebogen, so dass zwei jeweils nach außen weisende Einfüllstutzenwände gebildet sind. Die Gießformmantelwand rohrförmig so vorgebogen, dass sich die beiden Einfüllstutzenwände gegenüberstehen und dazwischen ein sich über die gesamte axiale Gießformlänge erstreckender Einfüllspalt verbleibt. Der Gießformmantel ist durch den Einfüllspalt in Umfangsrichtung unterbrochen. Der Außenumfang des Gießraums und damit der Außenumfang der Gießharzspule ist dabei durch die Länge der Gießformmantelwand festgelegt. Insoweit sind für Spulen mit unterschiedlichen Außendurchmessern auch verschiedene Gießformen erforderlich, die entsprechend gelagert werden müssen, was zu entsprechend hohen Lagerkosten führt.

Aufgabe der Erfindung ist es, eine Gießform der eingangs genannten Art anzugeben, die einen geringeren Lageraufwand erfordert.

Die Aufgabe wird bei einer Gießform der eingangs genannten Art erfindungsgemäß dadurch gelöst, dass die Gießformmantelwand im Normalzustand als weitgehend flache Platte vorliegt und aus einem derart federnden Material gebildet ist, dass sie zur Bildung des Gießformmantels gegen eine Federkraft in den rohrförmig Zustand gebogen und gehalten werden muss.

Die Gießform kann dadurch besonders platzsparend gelagert werden, da deren Gießformwand vorteilhaft im Normalzustand, indem sie nicht zur Gießform gebogen ist, als weitgehend flache Platte vorliegt, so dass die Gießform, wenn sie nicht verwendet wird, insgesamt auch als im wesentlichen flache Platte vorliegt und dadurch nur einen geringen Lagerplatz beansprucht.

Vorzugsweise ist der Gießformmantel aus Federstahlblech gebildet. Eine aus Federstahl ausgebildete Gießformmantelwand ist besonders gut federnd und auch sehr stabil und damit sehr haltbar.

Bevorzugt ist der Einfüllspalt mit nach außen weisenden, mit der Gießformmantelwand verbundenen Einfüllstutzenwänden begrenzt, die zur Halterung der Gießformmantelwand im rohrförmig gebogenen Zustand miteinander verbindbar sind. Die Einfüllstützenwände bilden vorteilhaft eine trichterartige Führung beim Eingießen des Gießharzes in den Gießraum über den Einfüllspalt und gleichzeitig kann die Gießformmantelwand mechanisch einfach durch ein Verbinden der Einfüllstützenwände im gebogenen Zustand gehalten werden.

Besonders bevorzugt ist die Gießformmantelwand jeweils an ihren in axialer Richtung verlaufenden Seiten unter Bildung der Einfüllstutzenwände nach außen abgebogen. Dadurch sind die Einfüllstutzenwände besonders einfach durch Abbiegen der Gießformmantelwand gebildet.

Vorzugsweise sind die Einfüllstutzenwände verstärkt. Dies ist insbesondere dann von Vorteil, wenn die Gießformmantelwand und damit die durch Abbiegen der Gießformmantelwand gebildeten Einfüllstutzenwände ebenfalls dünnwandig ausgebildet. Die Einfüllstutzenwände sind durch die mechanische Verstärkung sehr stabil ausgebildet. Zum Eingießen einer Gießharzspule kann dann die Gießformmantelwand besonders eng anliegend um die Gießharzspule herum gelegt werden, indem die beiden Einfüllstutzenwände - unter hoher Krafteinwirkung - entsprechend weit zusammengezogen werden.

Zur Verstärkung kann beispielsweise ein entsprechend gebogenes Blech oder eine Profilleiste verwendet werden. Bevorzugt sind die Einfüllstutzenwände jedoch jeweils mit einem jeweiligen Winkelprofil verstärkt. Das Winkelprofil kann dabei jede Art von Winkel zwischen seinen Schenkeln aufweisen, wobei noch die vorteilhafte trichterförmige Führung des Gießharzes beim Eingießen in die Gießform gegeben sein sollte.

Nach einer anderen Ausgestaltung sind die Einfüllstutzenwände jeweils mit einem Schenkel eines jeweiligen Winkelprofils gebildet, deren anderer Schenkel jeweils mit der Gießformmantelwand verbunden ist. Bei dieser Ausgestaltung können die Einfüllstutzenwände vorteilhaft dadurch gebildet werden, dass die Winkelprofile an den in axialer Richtung verlaufenden Seiten der Gießformmantelwand auf die Gießformmantelwand aufgesetzt werden.

Besonders bevorzugt sind die Einfüllstutzenwände axial kürzer als die Gießformmantelwand. Bei dieser Ausgestaltung ergibt sich der Vorteil, dass bei einem Abschließen des Gießraums, beispielsweise dadurch, dass an den Stirnseiten der Gießform den die Gießform abschließende Platten vorgesehen sind, auf denen die Gießformmantelwand steht, zumindest an einer der Stirnseiten der Gießform zwischen den Einfüllstutzenwänden und einer solchen abschließenden Platte ein Spalt verbleibt. Dadurch kann die Gießform an dieser Stirnseite sehr einfach abgedichtet werden und außerdem sind die Einfüllstutzenwände nicht der zum stirnseitigen Abschließen des Gießformens auf die Platten ausgeübten Spannkraft ausgesetzt, die auf die Gießformmantelwand wirkt.

Bevorzugt ist der Abstand der Einfüllstutzenwände einstellbar. Dadurch kann der Außenumfang des Gießraums durch Variation des Abstands der Einfüllstutzenwände, die zu einer Änderung der Einfüllspaltbreite führt, variiert werden, so dass mit der Gießform Spulen von geringfügig unterschiedlichem Außenumfang herstellbar sind.

Vorzugsweise sind die Einfüllstutzenwände über zumindest ein Distanzelement miteinander verbunden, wobei der Abstand der Einfüllstutzenwände durch die Elementlänge des zumindest einen Distanzelement definiert ist und wobei das Distanzelement derart ausgebildet ist, dass seine Elementlänge einstellbar ist. Dadurch kann der Abstand der Einfüllstutzenwände besonders einfach durch das entsprechende Einstellen der Elementlänge des Distanzelements eingestellt werden.

Bei der erfindungsgemäßen Gießform ist vorzugsweise vorgesehen, dass der Gießformmantel zumindest einer Gießformstirnseite auf einer die Gießform stirnseitig abschließenden Stirnfläche steht. Diese Ausgestaltung bietet den Vorteil, dass der Gießraum stirnseitig mit der gleichen Stirnfläche besonders leicht auf für verschiedene über den Abstand der Einfüllstutzenwände eingestellte Außendurchmesser der Gießform abgeschlossen werden kann.

Weiter bevorzugt ist der Gießraum an der abschließenden Stirnfläche mit einer Dichtung abgedichtet. Hierdurch ist vorteilhaft ein Austreten von Gießharz beim Befüllen der Gießform an der abschließenden Stirnfläche vermieden.

Bevorzugt umgreift die Dichtung den Gießformmantel. Dazu kann die Dichtung beispielsweise als u-Profil ausgebildet sein, dass stirnseitig über die Gießformmantelwand übergestülpt ist, wobei dann die Gießformmantelwand über die Dichtung an der abschließenden Stirnfläche anliegt. Eine solche Dichtung ist als Massenware und daher sehr preisgünstig erhältlich.

Die Erfindung wird anhand der Zeichnung näher erläutert. Es zeigen dabei
- Figur 1: eine Gießform in perspektivischer Ansicht,
- Figur 2: einen Gießformmantel,
- Figur 3: eine Gießform in einer Seitenansicht,
- Figur 4: eine Gießform in einer Seitenansicht und
- Figur 5: modifizierte Einfüllstutzenwände.

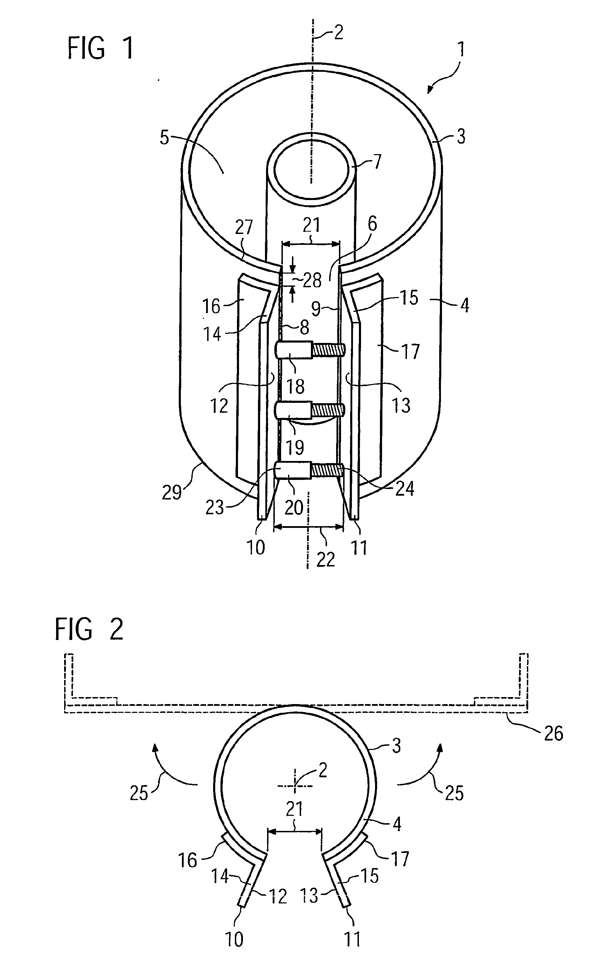

In Figur 1 ist eine Gießform 1 dargestellt, die sich entlang einer Achse 2 erstreckt und einen äußeren zylindrischen Gießformmantel 3 aufweist. Der Gießformmantel 3 ist mit einer dünnwandigen, rohrförmig gebogenen Gießformmantelwand 4 gebildet und umgibt einen zylindrische Gießbereich 5. Die Gießform 1 weist weiterhin einen Einfüllspalt 6 auf, über den der Gießbereich 5 mit Gießharz befüllbar ist. Der Einfüllspalt 6 erstreckt sich über die gesamte axiale Länge der Gießform, so dass der Gießformmantel 3 durch den Einfüllspalt in Umfangsrichtung unterbrochen ist. Der Gießbereich 5 ist radial innen durch einen weiteren Gießformmantel 7 begrenzt.

Die Gießformmantelwand 4 weist an ihren in axialer Richtung verlaufenden Seiten 8 und 9 jeweils eine nach außen weisende Einfüllstutzenwand 10 bzw. 11 auf. Die Einfüllstutzenwände 10 und 11 sind vorliegend jeweils mit einem Schenkel 12 bzw. 13 eines jeweiligen Winkelprofils 14 bzw. 15 gebildet, deren anderer Schenkel 16 bzw. 17 mit der Gießformmantelwand 4 beispielsweise durch Vernieten, Verschrauben oder Verkleben fest verbunden ist. Die Einfüllstutzenwände 10 und 11 sind über die Distanzelemente 18, 19 und 20 miteinander verbunden, so dass die Gießformmantelwand 4 in ihrem rohrförmig gebogenen Zustand gehalten ist. Die Gießformmantelwand 4 ist nämlich vorliegend aus einem derart federnden Material gebildet, dass sie zur Bildung der Gießform 1 in den rohrförmigen Zustand gegen eine Federkraft gebogen werden muss und normalerweise, also wenn die beiden Einfüllstutzenwände 10 und 11 nicht miteinander verbunden sind und sie auch nicht anderweitig im rohrförmig gebogenen Zustand gehalten wird, als weitgehend flache Platte vorliegt (siehe auch Figur 2).

Die Breite 21 des Einfüllspalts 6 entspricht dem Abstand der beiden Einfüllstutzenwände 10 und 11 zueinander festgelegt. Der Abstand der Einfüllstutzenwände 10, 11 und damit die Breite 21 des Einfüllspaltes 6 kann dadurch variiert werden, dass die Elementbreite 22 der Distanzelemente 18 bis 20 entsprechend variiert wird. Es können also für verschiedene Breiten 21 des Einfüllspaltes 6 verschiedene Sätze von Distanzelementen 18 bis 20 für jeweils eine Breite des Einfüllspaltes 6 vorgesehen sein. Vorliegend sind jedoch die Distanzelemente 18, 19 und 20 jeweils so ausgebildet, dass ihre Elementlänge 22, die nur beispielhaft für das Distanzelemente 20 eingezeichnet ist, einstellbar ist. Dazu weist jedes Distanzelement 18, 19 und 20 - wie beispielhaft am Distanzelement 20 erläutert - eine mit der Einfüllstutzenwand 10 verbundene Hülsenmutter 23 auf, in die eine durch die Einfüllstutzenwand 11 hindurchragende Schraube 24 eingeschraubt ist. Je weiter die Schraube 24 in die Hülsemutter 23 eingeschraubt ist, umso kürzer ist die Elementlänge 22 des Distanzelements 20. Insoweit kann die Elementlänge 22 des Distanzelements 20 durch verschieden weites Einschrauben der Schraube 24 variiert werden. Dadurch, dass die Breite 21 des Einfüllspalts 6 einstellbar ist, kann der Außenumfang des Gießbereichs 5 variiert werden, so dass mit der Gießform 1 ein Gießen von Spulen verschiedener Außendurchmesser ermöglicht ist.

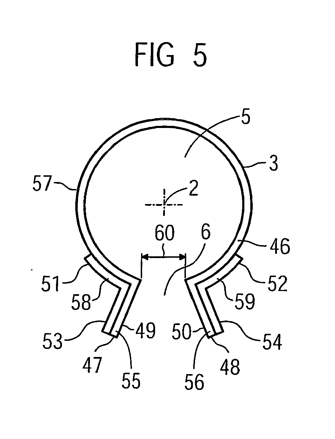

Die Einfüllstutzenwände 10 und 11 bzw. die Winkelprofile 14 und 15 können axial genau so lang ausgebildet sein, wie die Gießformmantelwand 4. Vorliegend ist es jedoch vorgesehen, dass die Einfüllstutzenwände 10, 11 axial kürzer sind als die Gießformmantelwand 4, wie beispielhaft für die Einfüllstutzenwand 10 mit dem Abstand 28 der Einfüllstutzenwand 10 zur oberen Kante 27 in der Gießformmantelwand 4 angedeutet ist. Vorliegend weist die Einfüllstutzenwand 10 einen dem Abstand 28 entsprechenden weiteren Abstand auch zur unteren Kante 29 der Gießformmantelwand 4 auf; dieser weitere Abstand ist der besseren Übersichtlichkeit halber allerdings nicht dargestellt. Ebenso ist auch die Einfüllstutzenwand 11 axial kürzer als die Gießformmantelwand 4. Dadurch, dass die Einfüllstutzenwände 10 und 11 axial kürzer als die Gießformmantelwand 4 sind, kann bei einem stirnseitigen Abschließen des Gießbereichs 5 dort an der Gießformmantelwand 4 besonders einfach eine Dichtung angebracht werden (siehe Figur 5).

In Figur 2 ist eine Draufsicht auf den in Figur 1 dargestellten, in den rohrförmigen Zustand gebogenen Gießformmantel 3 mit der Gießformmantelwand 4 und den mit den Winkelprofilen 14 und 15 gebildeten Einfüllstutzenwänden 10 und 11 dargestellt. Der besseren Übersichtlichkeit halber sind die Distanzelement 18 bis 20 nicht dargestellt. Wie schon zu Figur 1 erläutert, muss die Gießformmantelwand 4 zur Bildung der Gießform 1 gegen eine Federkraft, die mit Pfeilen 25 angedeutet ist, gebogen werden. Dadurch federt die Gießformmantelwand 4 ohne eine äußere Krafteinwirkung aufgrund der Federkraft 25 in ihren Normalzustand zurück, in dem sie, mit gestrichelten Linien 26 angedeutet, als weitgehend flache Platte vorliegt. Die Gießformmantelwand 4 kann dazu beispielsweise aus Federstahlblech ausgebildet sein. Dadurch, dass die Gießformmantelwand im Normalzustand als weitgehend flache Platte vorliegt, erfordert sie nur einen geringen Lagerplatz, so dass die Lagerkosten für die unbenutzte Gießform 1 sehr gering ist.

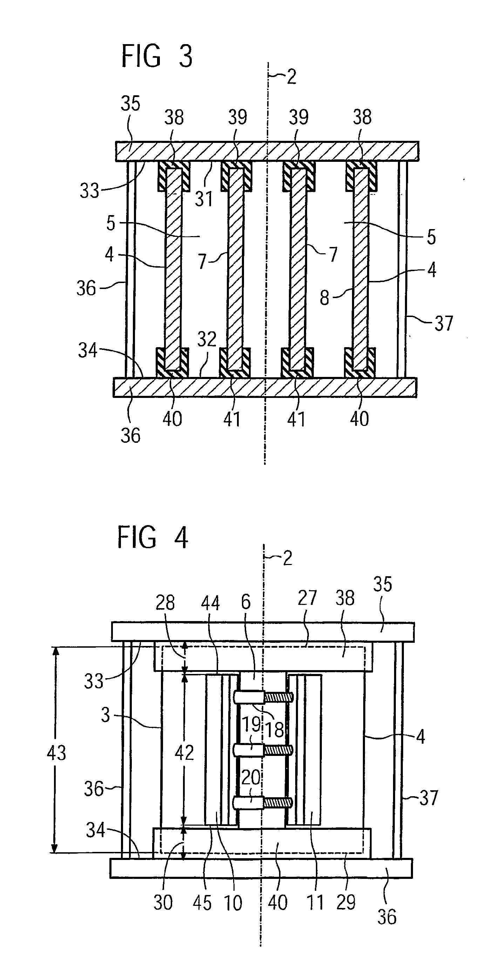

In Figur 3 ist die stirnseitig abgeschlossene Gießform 1 dargestellt. Dazu ist der Gießraum 5 an den Stirnseiten 31 und 32 der Gießform 1 jeweils mit einer Stirnfläche 33 bzw. 34 abgeschlossen. Die Stirnflächen 33 und 34 sind durch jeweils eine an den Stirnseiten 31 und 32 angeordnete flache Platte 35 bzw. 36 gebildet. Der Gießformmantel 4 steht jeweils stirnseitig auf den Stirnflächen 33 bzw. 34 auf. Zum Anpressen der Platten 35 und 36 liegen die Gießformmantelwand 4 und der Gießformmantel 7 sind diese über Zugstangen 36 bzw. 37 gegeneinander verspannt.

Zum Abdichten des Gießraums 5 sind an jeder der abschließenden Stirnflächen 33 und 34 Dichtungen 38 bis 41 vorgesehen, die beispielsweise aus Perbunan ausgebildet sein können. Die Dichtungen 38 bis 41 umgreifen dabei jeweils die Gießformmantelwand 4 bzw. den Gießformmantel 7 und sind dazu jeweils mit u-förmigem Profil ausgebildet. Solche Gießharzdichtungen 38 bis 41 sind in der Regel als Meterware erhältlich und dadurch preiswert; darüber hinaus sind sie besonders leicht an die Gießformmantelwand 4 bzw. 7 den Gießformmantel 7 anbringbar.

In Figur 4 ist eine Seitenansicht der abgeschlossenen Gießform 1 gemäß Figur 3 dargestellt. Deutlich zu erkennen ist dabei die Sicht auf den Einfüllstutzspalt 6 und die Einfüllstutzenwände 10 und 11, die über die nur schematisch angedeuteten Distanzelemente 18 bis 20 miteinander verbunden sind. Deutlich ist auch zu erkennen, dass die Einfüllstutzenwand 10 - wie auch schon zur Figur 1 erläutert - axial kürzer ist als die Gießformmantelwand 4; dementsprechend weist die Einfüllstutzenwand 10 eine axiale Länge 42 auf, die kürzer als die axiale Länge 43 der Gießformmantelwand 4 ist. Die obere Kante 44 der Einfüllstutzenwand 10 ist zur schematisch angedeuteten oberen Kante 27 der Gießformmantelwand 4 über den Abstand 28 beabstandet, und die untere Kante 45 der Einfüllstutzenwand 10 weist zur schematisch angedeuteten unteren Kante 29 der Gießformmantelwand 4 den Abstand 30 auf. Vorteilhaft braucht daher die Dichtung 38 bzw. 40 nur entlang der Gießformmantelwand 4 und nicht auch entlang der Kanten 44 bzw. 45 der Einfüllstutzenwand 10 geführt werden, was sich im Hinblick auf möglicherweise gegebene unterschiedliche Stärken der Gießformmantelwand 4 einerseits und der Einfüllstutzenwand 10 andererseits ungünstig auf eine Abdichtung bemerkbar machen würde. Darüber hinaus können die Dichtungen 38 und 40 über den Einfüllspalt 6 hinüber durchgehend ausgebildet sein, wodurch sich die Dichtungen 38 und 40 besonders einfach angebracht werden können, bevor die Gießform 1 mit den Platten 35 und 36 stirnseitig abgedichtet wird. Vorliegend ist die Einfüllstutzenwand 10 im Hinblick auf ihre axiale Länge 42 symmetrisch zwischen den Kanten 27 und 29 der Gießformmantelwand 4 angeordnet.

In Figur 5 ist eine der Darstellung in Figur 2 entsprechende Draufsicht auf eine modifizierte Gießformmantelwand 46 dargestellt. Die Gießformmantelwand 46 ist an ihren in axialer Richtung verlaufenden Seiten 47 und 48 nach außen abgebogen, so dass mit der Gießformmantelwand 46 Einfüllstutzenwände 49 bzw. 50 gebildet sind. Je nach Stärke der Gießformmantelwand 46 kann die mechanische Stabilität der Einfüllstutzenwände 49 und 50 völlig ausreichend sein. Um jedoch eine besonders gute mechanische Stabilität der Einfüllstutzenwände 49 und 50 sicherzustellen, sind diese verstärkt. Zur Verstärkung weist jede der Einfüllstutzenwände 49 bzw. 50 ein Winkelprofil 51 bzw. 52 auf, deren einer Schenkel 53 bzw. 54 jeweils an dem abgebogenen Teil 55 bzw. 56 der Gießformmantelwand 46 anliegt und deren jeweils anderer Schenkel 58 bzw. 59 an dem den Außenumfang des Gießraums 5 definierenden Teil 57 der Gießformmantelwand 46 anliegt. Die Einfüllstutzenwände 49 und 50 sind also jeweils mit einem Schenkel 53 des Winkelprofils 51 und dem abgebogenen Teil 55 der Gießformmantelwand 46 bzw. dem einen Schenkel 44 des Winkelprofils 52 und dem abgebogenen Teil 56 der Gießformmantelwand 46 gebildet. Auch die Einfüllstutzenwände 49 und 50 können axial kürzer sein als die axiale Länge der Gießformmantelwand 46. Dann sind die abgebogenen Teile 55 und 56 axial kürzer als die Gießformmantelwand 46 in dem den Außenumfang des Gießraums 5 definierenden Teil 57. Ebenso weisen die Winkelprofile 51 und 52 eine geringere axiale Länge auf, als die Gießformmantelwand 46 in dem den Außenumfang des Gießraums 5 definierenden Teil 57. Zur Verstärkung sind die Winkelprofile 51 und 52 mit der Gießformmantelwand 46 und den abgebogenen Teilen 55 und 56 jeweils mechanisch fest verbunden.

Vorliegend sind die Einfüllstutzenwände 10 und 11 gemäß Figur 2 und die Einfüllstutzenwände 49 und 50 gemäß Figur 5 als rechtwinklig von der Gießformmantelwand 4 bzw. 46 nach außen weisend dargestellt. Selbstverständlich können die Einfüllstutzenwände 10 und 11 bzw. 49 und 50 auch unter anderen Winkeln nach außen weisen.

Zur Verstärkung kann an Stelle des Winkelprofils 51 bzw. 52 auch ein Profil mit einem runden oder ovalen Querschnitt, oder eine Leiste aus Vollmaterial mit entsprechendem Querschnitt vorgesehen sein.

Der Abstand 60 der Einfüllstutzenwände 49 und 50 kann ebenso wie der Abstand 21 der Einfüllstutzenwände 10 und 11 (siehe Figur 1) eingestellt werden. Ebenso können dazu den Distanzelementen 19 bis 20 gemäß Figur 1 entsprechende Distanzelemente oder verschiedene Sätze von Distanzelementen mit fester Elementlänge vorgesehen sein.

## Patentansprüche

1. Gießform (1) für zylindrische Gießharzspulen, die sich entlang einer Achse (2) erstreckt, mit einem äußeren, einen zylindrischen Gießbereich (5) umgebenden Gießformmantel (3), der mit einer rohrförmig gebogenen Gießformmantelwand (4, 46) gebildet ist und mit einem Einfüllspalt (6), über den der Gießbereich (5) mit Gießharz befüllbar ist und durch den der Gießformmantel (3) in Umfangsrichtung unterbrochen ist, **dadurch gekennzeichnet, dass**
die Gießformmantelwand (4, 46) im Normalzustand als weitgehend flache Platte vorliegt und aus einem derart federnden Material gebildet ist, dass sie zur Bildung des Gießformmantels (3) gegen eine Federkraft in den rohrförmig Zustand gebogen und gehalten werden muss.

2. Gießform nach Anspruch 1, **dadurch gekennzeichnet, dass** die Gießformmantelwand (4, 46) aus Federstahlblech gebildet ist.

3. Gießform nach einem der Ansprüche 1 oder 2, **dadurch gekennzeichnet, dass** der Einfüllspalt (6) mit nach außen weisenden, mit der Gießformmantelwand (4, 46) verbundenen Einfüllstutzenwänden (10,11; 49,50) begrenzt ist, die zur Halterung der Gießformmantelwand (4, 46) im rohrförmig gebogenen Zustand miteinander verbindbar sind.

4. Gießform nach Anspruch 3, **dadurch gekennzeichnet, dass** die Gießformmantelwand (46) jeweils an ihren in axialer Richtung verlaufenden Seiten unter Bildung der Einfüllstutzenwände (49, 50) nach außen abgebogen ist.

5. Gießform nach Anspruch 4, **dadurch gekennzeichnet, dass** die Einfüllstutzenwände (49, 50) mechanisch verstärkt sind.

6. Gießform nach Anspruch 5, **dadurch gekennzeichnet, dass** die Einfüllstutzenwände (49, 50) jeweils mit einem jeweiligen Winkelprofil (51, 52) verstärkt sind.

7. Gießform nach Anspruch 3, **dadurch gekennzeichnet, dass** die Einfüllstutzenwände (10, 11) jeweils mit einem Schenkel (12, 13) eines jeweiligen Winkelprofils (14, 15) gebildet sind, deren anderer Schenkel (16, 17) jeweils mit der Gießformmantelwand (4) verbunden ist.

8. Gießform nach einem der Ansprüche 3 bis 7, **dadurch gekennzeichnet, dass** die Einfüllstutzenwände (10,11; 49,50) axial kürzer sind, als die Gießformmantelwand (4, 46).

9. Gießform nach einem der Ansprüche 3 bis 7, **dadurch gekennzeichnet, dass** der Abstand (21, 60) der Einfüllstutzenwände (10,11; 49,50) einstellbar ist.

10. Gießform nach Anspruch 8, **dadurch gekennzeichnet, dass** die Einfüllstutzenwände (10,11; 49,50) über zumindest ein Distanzelement (18, 19, 20) miteinander verbunden sind, wobei der Abstand (21) der Einfüllstutzenwände (10,11) durch die Elementlänge (22) des zumindest einen Distanzelements (18, 19, 20) definiert ist und wobei das Distanzelement (18, 19, 20) derart ausgebildet ist, dass seine Elementlänge (22) einstellbar ist.

11. Gießform nach einem der vorhergehenden Ansprüche,
**dadurch gekennzeichnet, dass**
der Gießformmantel (3) zumindest an einer Gießformstirnseite (31, 32) auf einer den Gießraum (5) stirnseitig abschließenden Stirnfläche (33, 34) steht.

12. Gießform nach Anspruch 11,
**dadurch gekennzeichnet, dass**
der Gießraum an der abschließenden Stirnfläche mit einer Dichtung (38,40; 39,41) abgedichtet ist.

13. Gießform nach Anspruch 12,
**dadurch gekennzeichnet, dass**
die Dichtung (38, 40) die Gießformmantelwand (4) umgreift.

## Claims

1. Casting mould (1) for cylindrical cast-resin coils, which extends along an axis (2), comprising an outer mantle (3), which surrounds a cylindrical casting area (5) and is formed with a tubularly bent mantle wall (4, 46), and comprising a filling gap (6), via which the casting area (5) can be filled with casting resin and by which the mantle (3) is interrupted in the peripheral direction, **characterized in that** the mantle wall (4, 46) exists in the normal state as a largely flat plate and is formed from a suitably resilient material such that, for the formation of the mantle (3), the plate must be bent into and held in the tubular state counter to a spring force.

2. Casting mould according to Claim 1, **characterized in that** the mantle wall (4, 46) is formed from spring steel plate.

3. Casting mould according to one of Claims 1 or 2, **characterized in that** the filling gap (6) is delimited with outward-facing filling tube walls (10, 11; 49, 50) which are connected to the mantle wall (4, 46) and which can be connected to one another to hold the mantle wall (4, 46) in the tubularly bent state.

4. Casting mould according to Claim 3, **characterized in that** the mantle wall (46), on its axially extending sides, is respectively bent outwards to form the filling tube walls (49, 50).

5. Casting mould according to Claim 4, **characterized in that** the filling tube walls (49, 50) are mechanically reinforced.

6. Casting mould according to Claim 5, **characterized in that** the filling tube walls (49, 50) are in each case reinforced with a respective angle profile (51, 52).

7. Casting mould according to Claim 3, **characterized in that** the filling tube walls (10, 11) are in each case formed with a leg (12, 13) of a respective angle profile (14, 15), the other leg (16, 17) of which is respectively connected to the mantle wall (4).

8. Casting mould according to one of Claims 3 to 7, **characterized in that** the filling tube walls (10, 11; 49, 50) are axially shorter than the mantle wall (4, 46).

9. Casting mould according to one of Claims 3 to 7, **characterized in that** the distance apart (21, 60) of the filling tube walls (10, 11; 49, 50) is adjustable.

10. Casting mould according to Claim 8, **characterized in that** the filling tube walls (10, 11; 49, 50) are connected to one another by at least one spacing element (18, 19, 20), the distance apart (21) of the filling tube walls (10, 11) being defined by the elementary length (22) of the at least one spacing element (18, 19, 20) and the spacing element (18, 19, 20) being configured such that its elementary length (22) is adjustable.

11. Casting mould according to one of the preceding claims, **characterized in that** the mantle (3), at least on one casting mould end side (31, 32), stands on an end face (33, 34) which closes off the casting space (5) on the end side.

12. Casting mould according to Claim 11, **characterized in that** the casting space, on the closing-off end face, is sealed off with a seal (38, 40; 39, 41).

13. Casting mould according to Claim 12, **characterized in that** the seal (38, 40) embraces the mantle wall (4).

## Revendications

1. Moule (1) de coulée pour des bobines cylindriques en résine de coulée, qui s'étend le long d'un axe (2) comprenant une enveloppe (3) extérieure de moule de coulée qui entoure une zone (5) cylindrique de coulée, qui est formé d'une paroi (4, 46) courbée tubulairement d'enveloppe de moule de coulée et qui a une fente (6) de remplissage par laquelle la zone (5) de coulée peut être remplie de résine de coulée et par laquelle l'enveloppe (3) de moule de coulée est interrompue dans la direction périphérique, **caractérisé en ce que**
la paroi (4, 46) de l'enveloppe du moule de coulée se présente à l'état normal sous la forme d'une plaque dans une grande mesure plate et est formée d'un matériau élastique de sorte qu'elle doit être courbée et maintenue à l'état tubulaire à l'encontre d'une force élastique pour former l'enveloppe (3) du moule de coulée.

2. Moule de coulée suivant la revendication 1, **caractérisé en ce que** la paroi (4, 46) de l'enveloppe du moule de coulée est en une tôle d'acier pour ressort.

3. Moule de coulée suivant l'une des revendications 1 ou 2, **caractérisé en ce que** la fente (6) de remplissage est délimitée par des parois (10, 11 ; 49, 50) formant tuyau de remplissage qui sont tournées vers l'extérieur, qui sont reliées à la paroi (4, 46) de l'enveloppe du moule de coulée et qui peuvent être assemblées entre elles pour maintenir la paroi (4, 46) de l'enveloppe du moule de coulée à l'état courbé de façon tubulaire.

4. Moule de coulée suivant la revendication 3, **caractérisé en ce que** la paroi (46) de l'enveloppe du moule de coulée est coudée vers l'extérieur, respectivement, sur ses côtés s'étendant dans la direction axiale en formant les parois (49, 50) de tuyau de remplissage.

5. Moule de coulée suivant la revendication 4, **caractérisé en ce que** les parois (49, 50) de tuyau de remplissage sont renforcées mécaniquement.

6. Moule de coulée suivant la revendication 5, **caractérisé en ce que** les parois (49, 50) de tuyau de remplissage sont renforcées, respectivement, par un profil (51, 52) d'équerre.

7. Moule de coulée suivant la revendication 3, **caractérisé en ce que** les parois (10, 11) de tuyau de remplissage sont formées, respectivement, par une branche (12, 13) d'un profil (14, 15) d'équerre dont l'autre branche (16, 17) est assemblée, respectivement, à la paroi (4) de l'enveloppe du moule de coulée.

8. Moule de coulée suivant l'une des revendications 3 à 7, **caractérisé en ce que** les parois (10, 11 ; 49, 50) de tuyau de remplissage sont plus courtes axialement que la paroi (4, 46) de l'enveloppe du moule de coulée.

9. Moule de coulée suivant l'une des revendications 3 à 7, **caractérisé en ce que** la distance (21, 60) entre les parois (10, 11 ; 49, 50) de tuyau de remplissage est réglable.

10. Moule de coulée suivant la revendication 8, **caractérisé en ce que** les parois (10, 11 ; 49, 50) de tuyau de remplissage sont assemblées entre elles par au moins un élément (18, 19, 20) d'entretoisement, la distance (21) entre les parois (10, 11) de tuyau de remplissage étant définie la longueur (22) du au moins un élément (18, 19, 20) d'entretoisement et l'élément (18, 19, 20) d'entretoisement étant constitué de façon que sa longueur (22) soit réglable.

11. Moule de coulée suivant l'une des revendications précédentes, **caractérisé en ce qu'**au moins sur un côté (31, 32) frontal du moule de coulée, l'enveloppe (3) du moule de coulée repose sur une surface (33, 34) frontale fermant du côté frontal l'espace (5) de coulée.

12. Moule de coulée suivant la revendication 11, **caractérisé en ce que** l'espace de coulée est rendu étanche sur la surface frontale à fermer par une garniture (38, 40 ; 39, 41) d'étanchéité.

13. Moule de coulée suivant la revendication 12, **caractérisé en ce que** les garnitures (38, 40) d'étanchéité entourent la paroi (4) de l'enveloppe du moule de coulée
